# EUROPEAN PATENT APPLICATION

(11) **EP 4 306 722 A1**
(43) Date of publication of application: **17.01.2024**
(21) Application number: 22766650.0
(22) Date of filing: 26.01.2022
(51) Int. Cl.: E02F 3/43, E02F 9/26, G05G 25/00, G05G 1/08, G06F 3/04847, G06F 3/0362

(54) **OPERATION DEVICE AND CONSTRUCTION MACHINE**

(30) Priority: 09.03.2021 JP 2021036993
(71) Applicant: Yanmar Holdings Co., Ltd., Osaka-shi, Osaka 530-8311 (JP)
(72) Inventor: KAGEYAMA, Naoto, Chikugo-shi Fukuoka 833-0055 (JP); DEGUCHI, Takashi, Chikugo-shi Fukuoka 833-0055 (JP); TAMURA, Kazuki, Chikugo-shi Fukuoka 833-0055 (JP)
(74) Representative: Dennemeyer & Associates S.A.
(86) International application number: PCT/JP2022/002783
(87) International publication number: WO 2022/190683

(57) **Abstract**

[Problem] To provide an operation device capable of improving the operability of a rotation operation unit, and a construction machine comprising the operation device. [Solution] An operation device 10 of a construction machine 1 comprises a rotation operation unit 12 that receives rotation operation. A control unit 6 that controls the operation device 10 applies, to an object to be operated, a first operation content that depends on the rotation operation amount of the rotation operation unit 12 according to a first operation in which the rotation operation amount is less than a predetermined operation amount threshold per predetermined unit time, and applies a second operation content different from the first operation content to the object to be operated according to a second operation in which the rotation operation amount is greater than or equal to the operation amount threshold per unit time.

## Description

### TECHNICAL FIELD

The present invention rerates to an operation device, and a construction machine including the operation device.

### BACKGROUND ART

Conventional construction machines include an operation device for performing an operation of setting various functions. The operation device is composed of, for example, a jog dial including a rotation operation unit, and causes a transition of an operation target such as a setting value or an option according to the rotation operation amount of the rotation operation unit.

For example, the display device of the work machine disclosed in Patent Literature 1 includes an input operation unit for performing an input operation, and the input operation unit includes a first operation tool. The first operation tool includes a rotation operation unit subjected to a rotation operation, and a pressing operation unit capable of being subjected to a pressing operation, and is, for example, a rotary encoder switch.

### CITATION LIST

### Patent Literature

Patent Literature 1: JP 2018-104931 A

### DISCLOSURE OF INVENTION

### PROBLEMS TO BE SOLVED BY THE INVENTION

In the operation device of the construction machines described above, an input amount corresponding to the rotation operation amount of the rotation operation unit is applied to an operation target, that is, the rotation operation unit allows only a single operation to be applied to the operation target. However, the construction machines need to be able to perform an operation of setting various functions, and thus the operability of the rotation operation unit that allows the application of only a single operation is insufficient for the operation device of the construction machines.

An object of the present invention is to provide an operation device including a rotation operation unit having higher operability, and a construction machine including the operation device.

### MEANS FOR SOLVING THE PROBLEMS

In order to solve the above problem, an operation device of the present invention is an operation device including a rotation operation unit that receives a rotation operation, wherein in response to a first operation in which a rotation operation amount of the rotation operation unit is less than a predetermined operation amount threshold per predetermined unit time, a first operation content that corresponds to the rotation operation amount is applied to an operation target, and in response to a second operation in which the rotation operation amount is greater than or equal to the operation amount threshold per unit time, a second operation content that is different from the first operation content is applied to the operation target.

In order to solve the above problem, a construction machine of the present invention includes the operation device.

### EFFECT OF THE INVENTION

The present invention provides an operation device including a rotation operation unit having higher operability, and a construction machine including the operation device.

### BRIEF DESCRIPTION OF DRAWINGS

FIG. 1 is a block diagram of a construction machine according to an embodiment of the present invention.
FIG. 2 is a front view showing an example of an operation device of the construction machine according to the embodiment of the present invention.
FIG. 3 is a plan view showing an example of a home screen of the construction machine according to the embodiment of the present invention.
FIG. 4 is a plan view showing an example of a brightness adjustment screen of the construction machine according to the embodiment of the present invention.
FIG. 5 is a plan view showing an example of a date adjustment screen of the construction machine according to the embodiment of the present invention.
FIG. 6 is a plan view showing an example of a passcode screen of the construction machine according to the embodiment of the present invention.
FIG. 7 is a plan view showing an example of a function selection screen of the construction machine according to the embodiment of the present invention.
FIG. 8 is a plan view showing an example of a history calendar screen of the construction machine according to the embodiment of the present invention.
FIG. 9 is a plan view showing an example of a temperature unit setting screen of the construction machine according to the embodiment of the present invention.
FIG. 10 is a plan view showing another example of the home screen of the construction machine according to the embodiment of the present invention.

### DESCRIPTION OF EMBODIMENTS

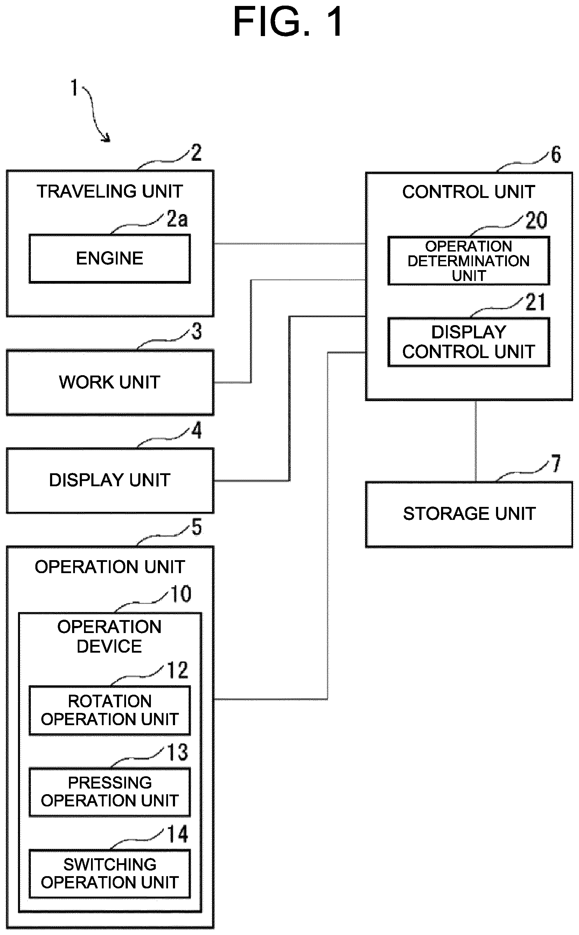

A construction machine 1 according to an embodiment of the present invention will be described with reference to the drawings. FIG. 1 is a block diagram showing the construction machine 1 of the present embodiment.

The construction machine 1 is, for example, a hydraulic excavator that performs work such as civil engineering work and construction work according to an operation performed by an operator. The construction machine 1 includes, for example, a traveling unit 2, a work unit 3, a display unit 4, an operation unit 5, a control unit 6, and a storage unit 7.

The traveling unit 2 performs traveling and turning of the construction machine 1 according to an operation performed by an operator. The traveling unit 2 is composed of a lower traveling body including a pair of crawlers capable of traveling, and an upper turning body including a cabin and an engine 8. The upper turning body is rotatably supported above the lower traveling body. The traveling unit 2 receives power from the engine 8 and is driven to perform traveling and turning.

The work unit 3 performs various types of work such as earth excavation work and crushing work according to an operation performed by an operator, and is attached to the upper turning body of the traveling unit 2. The work unit 3 is composed of a boom, an arm, and an attachment such as a bucket. The work unit 3 includes a hydraulic actuator, and uses hydraulic power of hydraulic oil to drive the boom, the arm, and the attachment. The work unit 3 uses power generated by the engine of the traveling unit 2 to supply hydraulic oil from a hydraulic tank to the hydraulic actuator by a hydraulic pump, and uses the hydraulic oil pressurized by the hydraulic pump as a power transmission medium to drive the hydraulic actuator.

The display unit 4 and the operation unit 5 are provided in the cabin of the upper turning body. The display unit 4 is a display device such as a liquid crystal display for displaying various types of information, and displays various screens according to an operation of the operation unit 5. For example, a screen displayed on the display unit 4 displays a setting item for which an input operation or a setting operation of an operation device 10 of the operation unit 5 is to be performed.

The operation unit 5 receives an operation performed by an operator. The operation unit 5 includes a manipulation device such as an operation lever or an operation button for operating traveling and turning performed by the traveling unit 2 and various types of work performed by the work unit 3. Furthermore, the operation unit 5 includes an operation device 10 for performing an input operation and a setting operation on various types of information.

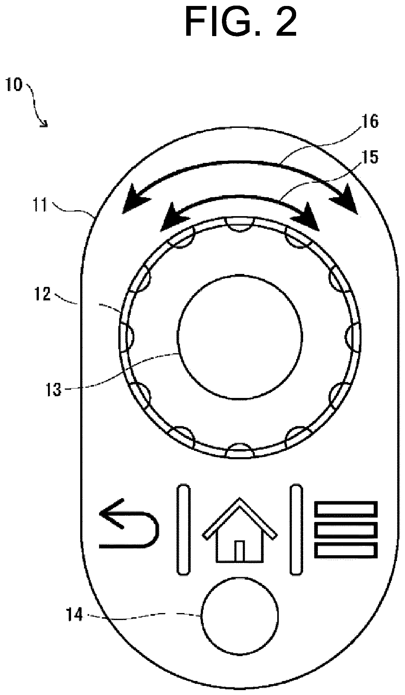

The operation device 10 is composed of a jog dial, and as shown in FIG. 2, has a main body 11 including a rotation operation unit 12 that receives a rotation operation, a pressing operation unit 13 that receives a pressing operation, and a switching operation unit 14 that receives an operation of switching an operation mode.

The rotation operation unit 12 is composed of a dial body that has a cylindrical shape and is rotatably provided and that is rotated for each predetermined rotation angle in a clockwise direction (normal direction) and a counterclockwise direction (reverse direction). The rotation operation unit 12 is configured to receive a rotation at a predetermined rotation angle as a single click operation, that is, receive a predetermined number of (e.g., 12) click operations for a single rotation. The rotation operation unit 12 receives an input operation, a setting operation, or the like corresponding to a click operation for a predetermined operation target, and outputs, to the control unit 6, an operation signal corresponding to the click operation.

In particular, when the rotation operation amount (e.g., the number of clicks) of successive click operations is less than a predetermined operation amount threshold (5 clicks) per predetermined unit time (e.g., 0.1 seconds), the rotation operation unit 12 receives each of the click operations as a first operation. On the other hand, when the rotation operation amount (e.g., the number of clicks) of successive click operations is greater than or equal to the predetermined operation amount threshold (5 clicks) per predetermined unit time (e.g., 0.1 seconds), the rotation operation unit 12 receives the series of successive click operations as a single second operation.

For example, in response to the first operation, the rotation operation unit 12 applies, to the operation target, a first operation content that corresponds to the rotation operation amount of the rotation operation unit 12, and in response to the second operation of the rotation operation unit 12, the rotation operation unit 12 applies, to the operation target, a second operation content that is different from the first operation content. The first operation content is a content that corresponds to the rotation operation amount of the rotation operation unit 12, and causes a transition (change) of the operation target by one per click. The second operation content is a content that varies depending on the operation target. The main body 11 includes a first sign 15 that indicates the first operation content for the first operation of the rotation operation unit 12, and a second sign 16 that indicates the second operation content for the second operation of the rotation operation unit 12.

The pressing operation unit 13 is composed of, for example, a button that is provided integrally with the rotation operation unit 12 on the front side of the rotation operation unit 12 and is pressable against the rotation operation unit 12. The pressing operation unit 13 receives a selection confirmation operation, a determination operation, or the like corresponding to a pressing operation for a predetermined operation target, and outputs, to the control unit 6, an operation signal corresponding to the pressing operation. Alternatively, the pressing operation unit 13 may be provided separately from the rotation operation unit 12.

The switching operation unit 14 is composed of, for example, a button that is provided separately from the rotation operation unit 12 and the pressing operation unit 13 and is pressable. The switching operation unit 14 receives an operation of switching the operation mode for the rotation operation unit 12, and outputs, to the control unit 6, an operation signal corresponding to the pressing operation.

The operation device 10 and the display unit 4 can act in conjunction with each other. The operation device 10 receives an input operation, a setting operation, or the like for an operation target which is a screen displayed on the display unit 4, a setting item on the screen, or the like, and the display unit 4 causes a transition (change) of the displayed operation target in response to the input operation, the setting operation, or the like of the operation device 10. Thus, the operation device 10 may be configured to include the display unit 4 in addition to the rotation operation unit 12, the pressing operation unit 13, and the switching operation unit 14. The operation device 10 may receive an input operation, a setting operation, or the like for an operation target specified in advance such as the rotation speed of the engine 8, irrespective of the screen on the display unit 4.

The control unit 6 is composed of a CPU and the like, and controls the action of the components of the construction machine 1. For example, the control unit 6 receives an operation signal output from the manipulation device of the operation unit 5 and the operation device 10, and controls the components according to the operation signal. The storage unit 7 is composed of a storage medium such as a ROM or a RAM, and stores a program and data for controlling the components and functions of the construction machine 1.

The control unit 6 performs arithmetic processing based on the program and data stored in the storage unit 7 to control the components and functions of the construction machine 1. For example, the control unit 6 executes the program to function as an operation determination unit 20 and a display control unit 21. The operation device 10 and the control unit 6 can act in conjunction with each other. Thus, the operation device 10 may be configured to include the control unit 6 in addition to the rotation operation unit 12, the pressing operation unit 13, and the switching operation unit 14, and the operation device 10 may further include the display unit 4.

The operation determination unit 20 determines the operation of the operation device 10 based on an operation signal from the operation device 10. For example, the operation determination unit 20 determines, based on an operation signal from the rotation operation unit 12, whether the click operation of the rotation operation unit 12 is a first operation or a second operation. When the rotation operation amount of successive click operations of the rotation operation unit 12 is less than the predetermined operation amount threshold per predetermined unit time, the operation determination unit 20 determines that each of the click operations is a first operation. On the other hand, when the rotation operation amount of successive click operations of the rotation operation unit 12 is greater than or equal to the predetermined operation amount threshold per predetermined unit time, the operation determination unit 20 determines that the series of successive click operations is a single second operation.

For example, for an operation target which is a screen displayed on the display unit 4 or a setting item on the screen or for an operation target specified in advance irrespective of the screen display, the operation determination unit 20 causes a transition (change) of the operation target in response to an input operation, a setting operation, or the like through the first operation or the second operation of the rotation operation unit 12. The operation determination unit 20 stores, in the storage unit 7, information on the operation target after transition as necessary.

The operation determination unit 20 receives, based on an operation signal from the pressing operation unit 13, a selection confirmation operation, a determination operation, or the like for an operation target. For example, for an operation target for which an input operation, a setting operation, or the like of the rotation operation unit 12 has been performed, the operation determination unit 20 updates the operation target in response to a selection confirmation operation, a determination operation, or the like of the pressing operation unit 13. In place of the information on the operation target stored in the storage unit 7, the operation determination unit 20 stores, in the storage unit 7, information on the operation target updated in response to the selection confirmation operation, the determination operation, or the like of the pressing operation unit 13.

The operation determination unit 20 receives, based on an operation signal from the switching operation unit 14, an operation of switching the operation mode of the first operation and the second operation of the rotation operation unit 12. The rotation operation unit 12 has, as the operation mode, a setting operation mode in which the operation target is operated and a screen operation mode in which the operation of selecting a screen displayed on the display unit 4 or a setting item on the screen is performed. The operation determination unit 20 receives different first operation contents in response to a first operation in the setting operation mode and a first operation in the screen operation mode, and receives different second operation contents in response to a second operation in the setting operation mode and a second operation in the screen operation mode.

The display control unit 21 controls the display unit 4 to display various screens. The display control unit 21 displays a menu bar 4a having a plurality of selection items on various screens on the display unit 4. The selection items in the menu bar 4a can be selected in response to the first operation and the second operation of the rotation operation unit 12 in the screen operation mode. For example, the operation determination unit 20 causes the selection of selection items in the menu bar 4a to be shifted by one to the right in response to the first operation in the normal direction, and causes the selection of selection items in the menu bar 4a to be shifted by one to the left in response to the first operation in the reverse direction. Furthermore, the operation determination unit 20 causes the selection of selection items in the menu bar 4a to be shifted to the right end in response to the second operation in the normal direction, and causes the selection of selection items in the menu bar 4a to be shifted to the left end in response to the second operation in the reverse direction. The display control unit 21 highlights the selected selection item according to the selection of selection items by the operation determination unit 20. The display control unit 21 may display an operation target on various screens on the display unit 4.

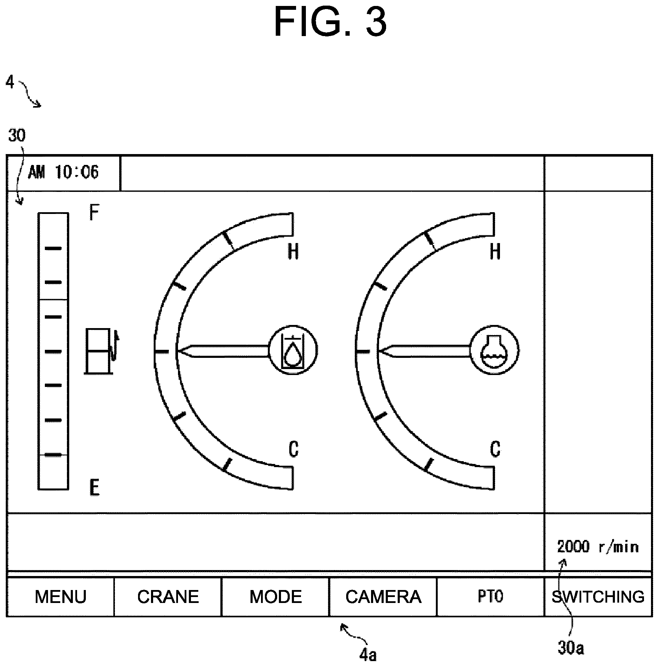

For example, when the construction machine 1 is operated, the display control unit 21 causes the display unit 4 to display a home screen 30 (see FIG. 3) as a basic screen. The home screen 30 displays, as an operation target in the menu bar 4a, a plurality of menu items that can be selected in the screen operation mode. The selected menu item is highlighted, and in response to an operation of confirming the selection of each of the menu items, the home screen 30 is switched to a screen for the corresponding menu item. The home screen 30 displays an engine rotation speed setting value 30a that can be increased or decreased in the setting operation mode.

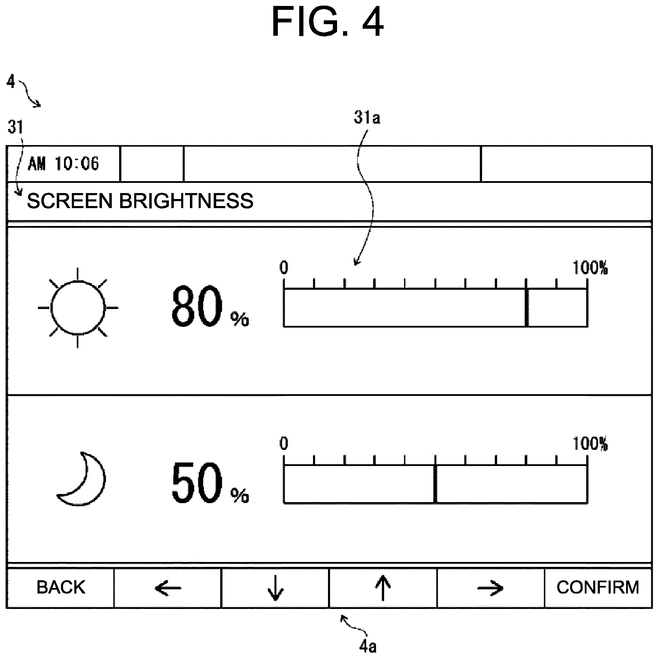

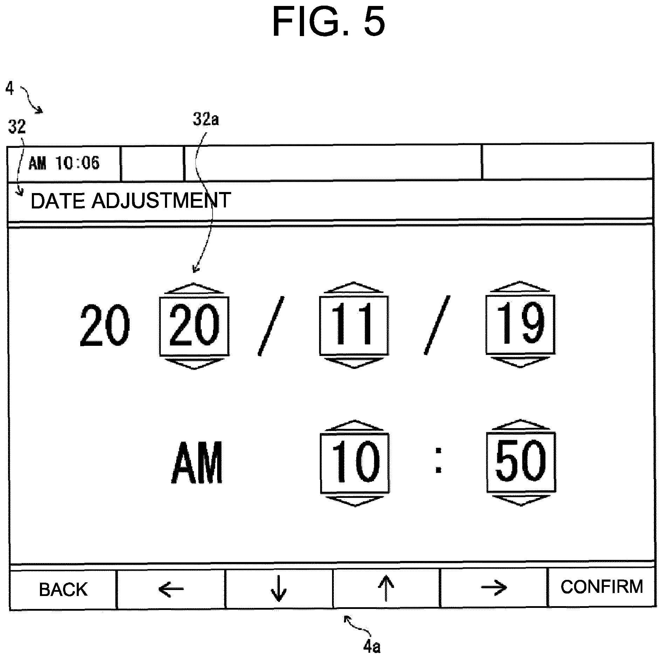

The display control unit 21 causes the display unit 4 to display, as various setting screens of the construction machine 1, a brightness adjustment screen 31 for adjusting the brightness of the screen on the display unit 4 (see FIG. 4), and a date adjustment screen 32 for adjusting the date and time on an internal clock of the construction machine 1 (see FIG. 5). The brightness adjustment screen 31 displays, as an operation target, a brightness setting value 31a that can be increased or decreased in the setting operation mode, and the date adjustment screen 32 displays, as an operation target, a date and time setting value 32a that can be increased or decreased in the setting operation mode. The selected operation target is highlighted. The brightness adjustment screen 31 and the date adjustment screen 32 display, as an operation target in the menu bar 4a, a plurality of selection items from which an operation of returning to the previous screen, an operation of selecting an operation target, or an operation of determining the adjustment of the operation target can be selected in the screen operation mode. The selected selection item is highlighted.

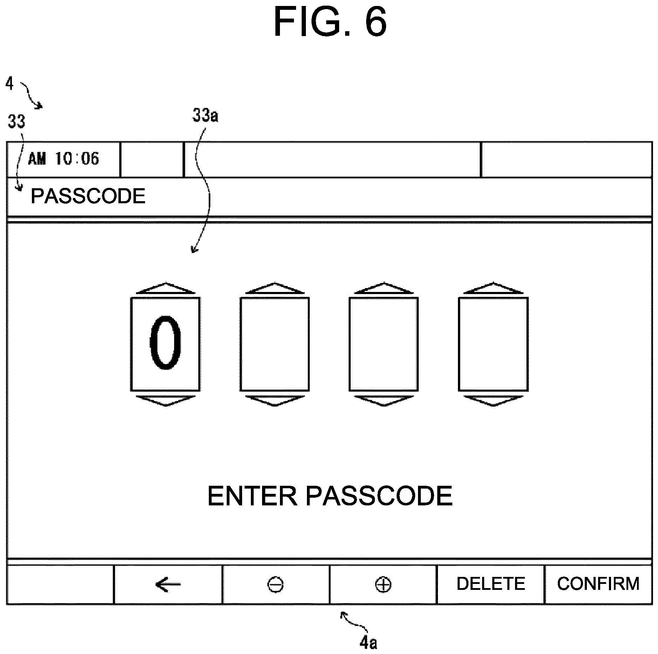

The display control unit 21 causes the display unit 4 to display a passcode screen 33 for inputting a passcode or a personal identification number of the construction machine 1 (see FIG. 6). The passcode screen 33 displays, as an operation target in a matrix, a passcode setting value 33a in which each of passcode input digits can be increased or decreased in the setting operation mode. The selected input digit of the passcode setting value 33a is highlighted. The passcode screen 33 displays, as an operation target in the menu bar 4a, a plurality of selection items that can be selected in the screen operation mode. The operations for the selection items include an operation of increasing or decreasing passcode input digits, an operation of deleting input digits, and an operation of determining input digits. In the screen operation mode, when one of the input digits is determined, the selection is moved to the next input digit, and when one of the input digits is deleted, the selection is moved to the previous input digit.

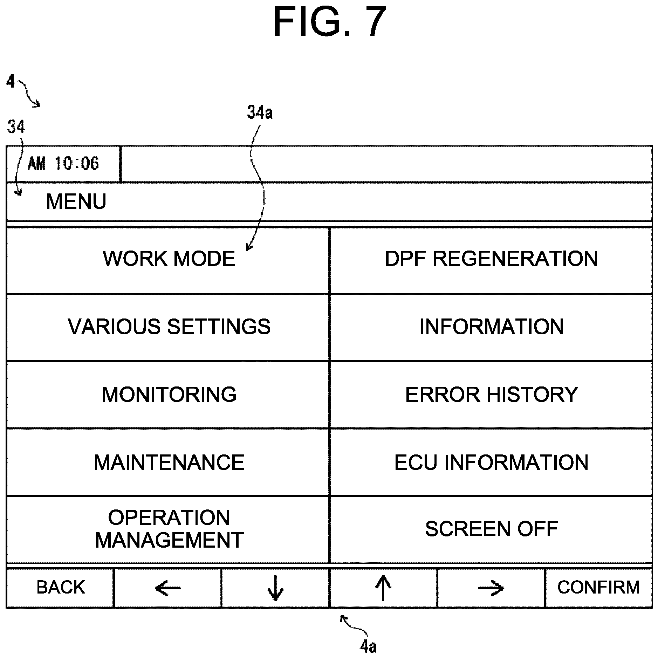

The display control unit 21 causes the display unit 4 to display, as various setting screens of the construction machine 1, a function selection screen 34 for selecting a function setting screen for each of the plurality of functions of the construction machine 1 (see FIG. 7). The function selection screen 34 displays a plurality of selection areas 34a (options) corresponding to the respective plurality of functions. On the function selection screen 34, the plurality of selection areas 34a can be selected as an operation target in the setting operation mode. The function selection screen 34 displays, as an operation target in the menu bar 4a, a plurality of selection items from which an operation of returning to the previous screen, an operation of selecting one of the selection areas 34a, or an operation of determining the selection of one of the selection areas 34a can be selected in the screen operation mode. The selected selection item is highlighted. In either operation mode, the selected selection area 34a is highlighted, and in response to an operation of confirming the selection of the selection area 34a, the function selection screen 34 is switched to a function setting screen.

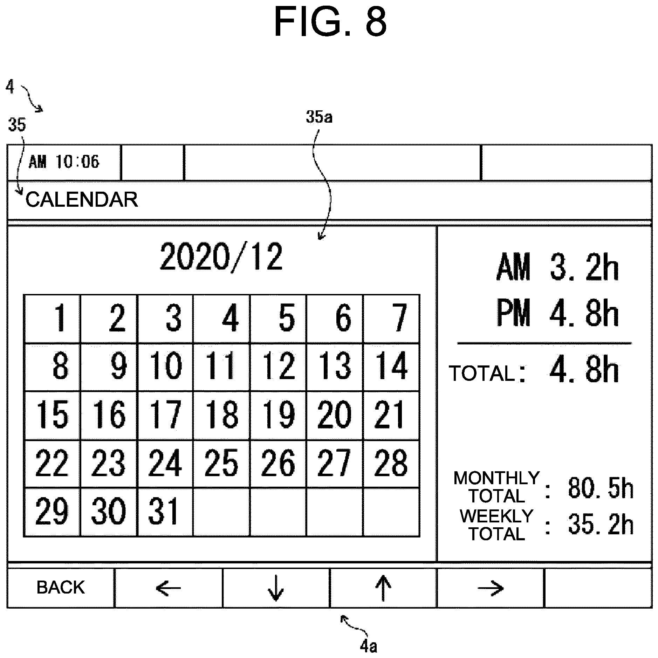

The display control unit 21 causes the display unit 4 to display, as various setting screens of the construction machine 1, a history calendar screen 35 for presenting a work history calendar as a function of the construction machine 1 (see FIG. 8). The history calendar screen 35 displays, as an operation target, a calendar 35a in which each of dates can be selected in the setting operation mode. The selected date is highlighted, and a work history corresponding to the selected date is displayed on the history calendar screen 35. The history calendar screen 35 displays, as an operation target in the menu bar 4a, a plurality of selection items from which an operation of returning to the previous screen or an operation of selecting one of the dates can be selected in the screen operation mode. The selected selection item is highlighted.

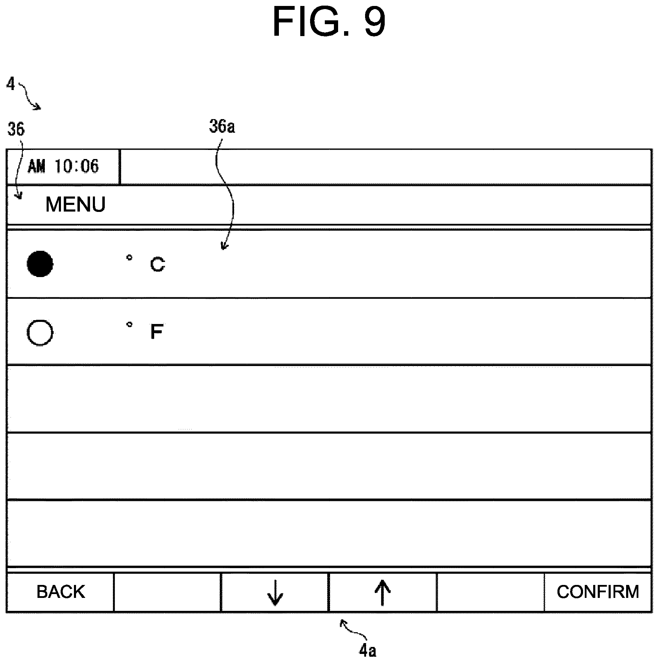

The display control unit 21 causes the display unit 4 to display, as various setting screens of the construction machine 1, a temperature unit setting screen 36 for setting a temperature unit when the display unit 4 displays the water temperature or oil temperature of the construction machine 1, or the air temperature (see FIG. 9). The temperature unit setting screen 36 displays, as an operation target, a plurality of temperature unit options 36a that can be alternatively selected in the setting operation mode. The selected temperature unit option 36a is highlighted. The temperature unit setting screen 36 displays, as an operation target in the menu bar 4a, a plurality of selection items from which an operation of returning to the previous screen, an operation of selecting one of the temperature unit options 36a, or an operation of determining the selection of one of the temperature unit options 36a can be selected in the screen operation mode. The selected selection item is highlighted.

Next, a first example of the first operation and the second operation of the rotation operation unit 12 of the operation device 10 of the construction machine 1 will be described. In the first example, a setting value that can be increased or decreased serves as an operation target, and the operation determination unit 20 of the control unit 6 causes a transition (displacement) of the operation target by a change amount that corresponds to the rotation operation amount of the rotation operation unit 12, in response to the first operation of the rotation operation unit 12. In a first specific example of the first example, in particular, the operation determination unit 20 of the control unit 6 causes a transition (displacement) of the setting value as an operation target by a change amount that is set in advance, in response to the second operation of the rotation operation unit 12.

An example will be described in which the operation mode is the setting operation mode and the engine rotation speed serves as an operation target when the home screen 30 is displayed on the display unit 4 or no operation target is displayed on the display unit 4. In this case, the operation determination unit 20 causes a displacement of the engine rotation speed by a first change amount (e.g., 20 rpm) per click, in response to the first operation of the rotation operation unit 12, and causes a displacement of the engine rotation speed, irrespective of the number of clicks, by a second change amount (e.g., 100 rpm) that is different from the first change amount, in response to the second operation of the rotation operation unit 12. In this case, no operation of determining selection items in the menu bar 4a or the like is performed, and thus the engine rotation speed may be confirmed simultaneously with the first operation and the second operation. The operation determination unit 20 confirms the engine rotation speed after displacement and stores the engine rotation speed after displacement in the storage unit 7, and the control unit 6 controls the engine 8 according to the engine rotation speed after displacement.

As shown in FIG. 3, when the home screen 30 including the engine rotation speed setting value 30a is displayed on the display unit 4, the display control unit 21 displays the engine rotation speed setting value 30a after displacement. The first change amount and the second change amount may be set in advance and stored in the storage unit 7. The operation determination unit 20 may receive an operation of setting the first change amount and the second change amount, in response to an operation of the operation device 10, and store an arbitrarily set first change amount and second change amount in the storage unit 7.

In the example described above, the engine rotation speed serves as an operation target when no operation target is displayed on the display unit 4; however, an item other than the engine rotation speed may serve as an operation target, and the operation target may be arbitrarily set.

Furthermore, in the first example, also when a setting value that can be increased or decreased such as the brightness setting value 31a or the date and time setting value 32a serves as an operation target as on the brightness adjustment screen 31 shown in FIG. 4 or the date adjustment screen 32 shown in FIG. 5, different change amounts are applied to the setting value in response to the first operation and the second operation as in the above case. When an operation of determining selection items in the menu bar 4a is performed as on the brightness adjustment screen 31 and the date adjustment screen 32, the setting value after transition (displacement) is confirmed in response to the determination operation.

Alternatively, in a second specific example of the first example, the operation determination unit 20 of the control unit 6 causes a transition of a setting value as an operation target to a specified state that is set in advance, in response to the second operation of the rotation operation unit 12. For example, for a setting value that can be increased or decreased which is an operation target, a predetermined default value and a predetermined initial value are set in advance as a specified state, and stored in the storage unit 7. Then, the operation determination unit 20 causes a transition (displacement) of the setting value as an operation target to the default value in response to the second operation in the normal direction of the rotation operation unit 12, and causes a transition (displacement) of the setting value as an operation target to the initial value in response to the second operation in the reverse direction of the rotation operation unit 12. Furthermore, on the screen on the display unit 4 on which the setting value as an operation target is displayed, the display control unit 21 displays the specified state set in advance, in a mode identifiable from the setting value. The specified state may be displayed in the vicinity of the setting value.

Alternatively, in a third specific example of the first example, in response to the second operation of the rotation operation unit 12, the operation determination unit 20 of the control unit 6 determines the setting value subjected to displacement in response to the first operation. Even when no operation of determining selection items in the menu bar 4a or the like is performed as described above, the setting value can be confirmed in response to the second operation. Even when an operation of determining selection items in the menu bar 4a is performed as on the brightness adjustment screen 31 and the date adjustment screen 32, the operation determination unit 20 confirms, irrespective of the determination operation, the setting value after displacement, in response to the second operation.

Alternatively, in a fourth specific example of the first example, when a transition (displacement) of the setting value as an operation target to a predetermined candidate value has been performed in response to the first operation of the rotation operation unit 12, the operation determination unit 20 of the control unit 6 (temporarily) stores the candidate value in the storage unit 7 in response to the second operation in the normal direction of the rotation operation unit 12. When the candidate value is stored in the storage unit 7, on the screen on the display unit 4 on which the setting value as an operation target is displayed, the display control unit 21 displays the candidate value in a mode identifiable from the setting value. The candidate value may be displayed in the vicinity of the setting value. When the candidate value is stored in the storage unit 7, the operation determination unit 20 causes a transition (displacement) of the setting value as an operation target to the candidate value in response to the first operation in the reverse direction of the rotation operation unit 12.

Alternatively, in a fifth specific example of the first example, for a setting value as an operation target displayed in a matrix on the screen on the display unit 4, the operation determination unit 20 of the control unit 6 causes a transition of the setting value in a first direction which is the column direction or the row direction, in response to the first operation of the rotation operation unit 12, and causes a transition of the setting value in a second direction that is perpendicular to the first direction, in response to the second operation of the rotation operation unit 12.

For example, the passcode screen 33 shown in FIG. 6 displays, as an operation target, the passcode setting value 33a in which the passcode input digits are arranged in the row direction in the setting operation mode. The operation determination unit 20 increases the selected input digit by one in response to the first operation in the normal direction of the rotation operation unit 12, and decreases the selected input digit by one in response to the first operation in the reverse direction of the rotation operation unit 12, that is, the operation determination unit 20 causes a transition of the selected input digit in the column direction. On the other hand, the operation determination unit 20 causes the selection of input digits to be shifted to the right in response to the second operation in the normal direction of the rotation operation unit 12, and causes the selection of input digits to be shifted to the left in response to the second operation in the reverse direction of the rotation operation unit 12, that is, the operation determination unit 20 causes a transition of the selection of input digits in the row direction. The operation determination unit 20 confirms the passcode setting value 33a in response to a second operation in the setting operation mode or a determination operation in the screen operation mode while all the input digits of the passcode setting value 33a are input.

The examples of the second operation content for the second operation of the rotation operation unit 12 in the first example have been described; however, the second operation content is not limited to these examples, and the operation determination unit 20 may be configured to perform other operations. Furthermore, in the first example, the second operation content for the second operation is different for each operation target which is a setting value, and is different for each of various screens on the display unit 4 displaying the setting value. Thus, for an operation target in the setting operation mode on various screens, the operation determination unit 20 may receive an operation of setting the second operation content for the second operation, in response to an operation of the operation device 10, and store, in the storage unit 7, a second operation content arbitrarily set for each screen.

Next, a second example of the first operation and the second operation of the rotation operation unit 12 of the operation device 10 of the construction machine 1 will be described. In the second example, selectable selection items or options serve as an operation target, and the operation determination unit 20 of the control unit 6 causes a transition of the operation target by a change amount that corresponds to the rotation operation amount of the rotation operation unit 12, in response to the first operation of the rotation operation unit 12. In a first specific example of the second example, in particular, the operation determination unit 20 of the control unit 6 causes a transition of the operation target by a change amount that is set in advance, in response to the second operation of the rotation operation unit 12.

An example will be described in which the operation mode is the screen operation mode and the selection items in the menu bar 4a serve as an operation target when one of various screens such as the home screen 30 is displayed on the display unit 4. In this case, the operation determination unit 20 causes a transition of the selection of selection items by a first displacement amount (e.g., by one) per click, in response to the first operation of the rotation operation unit 12, and causes a transition of the selection of selection items, irrespective of the number of clicks, by a second displacement amount (e.g., by three) that is different from the first displacement amount, in response to the second operation in the normal direction of the rotation operation unit 12. Furthermore, the operation determination unit 20 causes a transition of the selection of selection items to an initial position (e.g., left end) in response to the second operation in the reverse direction of the rotation operation unit 12.

Alternatively, in a second specific example of the second example, when a plurality of options displayed on the display unit 4 serve as an operation target, and the operation mode is the setting operation mode, in response to the second operation of the rotation operation unit 12, the operation determination unit 20 of the control unit 6 determines the option subjected to transition in response to the first operation.

An example will be described in which the operation mode is the setting operation mode and options such as the plurality of selection areas 34a serve as an operation target when the function selection screen 34 shown in FIG. 7 or the like is displayed on the display unit 4. In this case, in response to the first operation of the rotation operation unit 12, the operation determination unit 20 causes a transition of the selection of selection areas 34a by a first displacement amount (e.g., by one) per click, and in response to the second operation in the normal direction of the rotation operation unit 12, the operation determination unit 20 confirms, irrespective of the number of clicks, the selection of selection area 34a subjected to transition in response to the first operation. Even when an operation of determining selection items in the menu bar 4a is performed as on the function selection screen 34, the operation determination unit 20 confirms, irrespective of the determination operation, the selection area 34a after transition, in response to the second operation. The operation determination unit 20 may be configured to confirm an operation of returning to the previous screen to return to the previous screen when three clicks are performed in response to the first operation in the reverse direction of the rotation operation unit 12 or when the second operation in the reverse direction of the rotation operation unit 12 is performed.

Alternatively, in a third specific example of the second example, when the display unit 4 can display a plurality of screens between which a transition can be made, as an operation target which is the screens displayed on the display unit 4, the operation determination unit 20 of the control unit 6 selects to display, in place of the currently displayed screen, another screen in response to the second operation of the rotation operation unit 12.

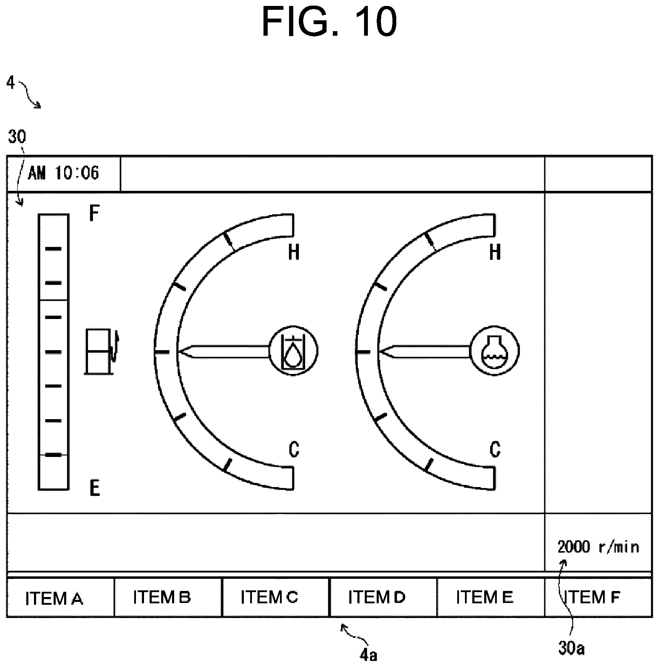

For example, as shown in FIG. 3, on various screens such as the home screen 30 displayed on the display unit 4, a predetermined number of (e.g., 6) selection items can be displayed in the menu bar 4a on a single screen, but the menu bar 4a may have more than the predetermined number of selection items over a plurality of pages. For example, the selection items displayed in the menu bar 4a on the first page shown in FIG. 3 are different from the selection items displayed in the menu bar 4a on the second page shown in FIG. 10.

When the operation mode is the screen operation mode, and the selection items in the menu bar 4a serve as an operation target, the operation determination unit 20 causes a transition of the selection of selection items in the menu bar 4a in response to the first operation of the rotation operation unit 12. When the first operation is further performed while the last selection item (the selection item at the right end) in the menu bar 4a on the first page shown in FIG. 3 is selected, the operation determination unit 20 selects to display the menu bar 4a on the second page shown in FIG. 10, and selects the first selection item (the selection item at the left end) in the menu bar 4a on the second page. In the third specific example, while the menu bar 4a on the first page is displayed on the home screen 30 or the like of the display unit 4, the operation determination unit 20 selects to display the menu bar 4a on the second page in response to the second operation in the normal direction. Furthermore, while the menu bar 4a on the second page is displayed on the home screen 30 or the like of the display unit 4, the operation determination unit 20 selects to display the menu bar 4a on the first page in response to the second operation in the reverse direction.

In the third specific example, in response to the second operation, the operation determination unit 20 may receive not only a transition between a plurality of screens on a single screen in the same hierarchy level as described above but also a transition between a plurality of screens in different hierarchy levels. For example, while a predetermined selection item is selected in the menu bar 4a on the home screen 30, the operation determination unit 20 selects to display the function selection screen 34 or function setting screen that corresponds to the selected selection item, in response to the second operation in the normal direction.

Alternatively, in a fourth specific example of the second example, the operation determination unit 20 of the control unit 6 causes a transition of a screen as an operation target to a screen as a specified state that is set in advance, in response to the second operation of the rotation operation unit 12. For example, when the screen as an operation target is different from the screen as a specified state, and the operation mode is the screen operation mode while one of various screens such as the home screen 30 is displayed on the display unit 4 as shown in FIG. 3, the operation determination unit 20 selects to display a specified screen such as the function selection screen 34 or function setting screen that is set in advance, in response to the second operation of the rotation operation unit 12. The specified screen may be set in advance and stored in the storage unit 7. The operation determination unit 20 may receive an operation of setting the specified screen, in response to an operation of the operation device 10, and store an arbitrarily set specified screen in the storage unit 7.

Alternatively, in a fifth specific example of the second example, the operation determination unit 20 of the control unit 6 causes a transition of selection items or options as an operation target to selection items or options as a specified state that is set in advance, in response to the second operation of the rotation operation unit 12. For example, when selection items or options serve as an operation target and a specified state, and the operation mode is the screen operation mode while, for example, the function selection screen 34 is displayed on the display unit 4 as shown in FIG. 7, the operation determination unit 20 selects a selection area 34a set in advance as a specified option, in response to the second operation of the rotation operation unit 12. The specified option may be set in advance and stored in the storage unit 7. The operation determination unit 20 may receive an operation of setting the specified option, in response to an operation of the operation device 10, and store an arbitrarily set specified option in the storage unit 7.

Alternatively, in a sixth specific example of the second example, for selection items or options as an operation target displayed in a matrix on the screen on the display unit 4, the operation determination unit 20 of the control unit 6 causes a transition of the selection of selection items or options in a first direction which is the column direction or the row direction, in response to the first operation of the rotation operation unit 12, and causes a transition of the selection of selection items or options in a second direction that is perpendicular to the first direction, in response to the second operation of the rotation operation unit 12.

For example, on the function selection screen 34 shown in FIG. 7, in the setting operation mode, the plurality of selection areas 34a serve as an operation target, and the plurality of selection areas 34a arranged in the column direction and the row direction are displayed as options. The operation determination unit 20 moves the selection of selection areas 34a forward by one in the column direction, in response to the first operation in the normal direction of the rotation operation unit 12, and moves the selection of selection areas 34a backward by one, in response to the first operation in the reverse direction of the rotation operation unit 12, that is, the operation determination unit 20 causes a transition of the selection of selection areas 34a in the column direction. On the other hand, the operation determination unit 20 moves the selection of selection areas 34a forward by one in the row direction, in response to the second operation in the normal direction of the rotation operation unit 12, and moves the selection of selection areas 34a backward by one, in response to the second operation in the reverse direction of the rotation operation unit 12, that is, the operation determination unit 20 causes a transition of the selection of selection areas 34a in the row direction.

On the history calendar screen 35 shown in FIG. 8, in the setting operation mode, the calendar 35a serves as an operation target, and the plurality of dates arranged in the column direction and the row direction are displayed as options. The operation determination unit 20 moves the selection of dates forward by one in the column direction, in response to the first operation in the normal direction of the rotation operation unit 12, and moves the selection of dates backward by one, in response to the first operation in the reverse direction of the rotation operation unit 12, that is, the operation determination unit 20 causes a transition of the selection of dates in the column direction. On the other hand, the operation determination unit 20 moves the selection of dates forward by one in the row direction, in response to the second operation in the normal direction of the rotation operation unit 12, and moves the selection of dates backward by one, in response to the second operation in the reverse direction of the rotation operation unit 12, that is, the operation determination unit 20 causes a transition of the selection of dates in the row direction.

Alternatively, in a seventh specific example of the second example, for selection items or options as an operation target alternatively displayed on the screen on the display unit 4, the operation determination unit 20 of the control unit 6 selects and determines one of the options in response to the first operation of the rotation operation unit 12, and selects and determines the other option in response to the second operation of the rotation operation unit 12.

For example, on the temperature unit setting screen 36 shown in FIG. 9, in the setting operation mode, the plurality of temperature unit options 36a serve as an operation target, and Celsius (°C) and Fahrenheit (°F), which are the temperature unit options 36a, are alternatively displayed as options. The operation determination unit 20 changes the selection of temperature unit options 36a in response to the first operation of the rotation operation unit 12. On the other hand, the operation determination unit 20 confirms the selection of one of the temperature unit options 36a in response to the second operation in the normal direction of the rotation operation unit 12, and confirms the selection of the other temperature unit option 36a in response to the second operation in the reverse direction of the rotation operation unit 12.

The examples of the second operation content for the second operation of the rotation operation unit 12 in the second example have been described; however, the second operation content is not limited to these examples, and the operation determination unit 20 may be configured to perform other operations. Furthermore, in the second example, the second operation content for the second operation is different for each operation target which is selection items or options, and is different for each of various screens on the display unit 4 displaying the selection items or options. Thus, for an operation target in the setting operation mode on various screens, the operation determination unit 20 may receive an operation of setting the second operation content for the second operation, in response to an operation of the operation device 10, and store, in the storage unit 7, a second operation content arbitrarily set for each screen.

As described above, in the present embodiment, the operation device 10 of the construction machine 1 includes the rotation operation unit 12 that receives a rotation operation. In response to a first operation in which the rotation operation amount of the rotation operation unit 12 is less than a predetermined operation amount threshold per predetermined unit time, the control unit 6 that controls the operation device 10 applies, to an operation target, a first operation content that corresponds to the rotation operation amount, and in response to a second operation in which the rotation operation amount is greater than or equal to the operation amount threshold per unit time, the control unit 6 applies, to the operation target, a second operation content that is different from the first operation content.

This enables the operation device 10 to apply a different operation content to the operation target for each of different operations of the single rotation operation unit 12. Thus, by simply including the single rotation operation unit 12 in the operation device 10, it is possible to apply any of the plurality of operation contents to the operation target. This leads to a wider range of operation contents for various functions of the construction machine 1, making it possible to provide the operation device 10 including the rotation operation unit 12 having higher operability.

For example, the control unit 6 that controls the operation device 10 causes a transition of the operation target by a change amount that corresponds to the rotation operation amount, in response to the first operation of the rotation operation unit 12, and causes a transition of the operation target by a change amount that is set in advance, in response to the second operation of the rotation operation unit 12. Thus, different operations of the single rotation operation unit 12 make it possible to selectively apply a different change amount to the operation target, achieving the rotation operation unit 12 having higher operability.

Alternatively, the control unit 6 that controls the operation device 10 causes a transition of the operation target by a change amount that corresponds to the rotation operation amount, in response to the first operation of the rotation operation unit 12, and causes a transition of the operation target to a specified state that is set in advance, in response to the second operation of the rotation operation unit 12. Thus, different operations of the single rotation operation unit 12 make it possible to selectively apply, to the operation target, a transition corresponding to the operation amount and a transition set in advance, achieving the rotation operation unit 12 having higher operability.

Furthermore, in the operation device 10, the display unit 4 capable of displaying an operation target displays the specified state in an identifiable mode. This makes it possible to notify an operator of the state to which a transition of the operation target is performed, thus achieving the rotation operation unit 12 having higher operability.

Alternatively, when a transition of the operation target to a predetermined candidate value has been performed in response to the first operation of the rotation operation unit 12, the control unit 6 that controls the operation device 10 stores the candidate value in the storage unit 7 in response to the second operation of the rotation operation unit 12. Thus, different operations of the single rotation operation unit 12 make it possible to selectively perform a transition of the operation target and temporary storing of the candidate value, achieving the rotation operation unit 12 having higher operability.

Furthermore, in the operation device 10, while the candidate value is stored in the storage unit 7, the display unit 4 capable of displaying an operation target displays the candidate value in an identifiable mode. This makes it possible to notify an operator of the temporarily stored candidate value, thus achieving the rotation operation unit 12 having higher operability.

Furthermore, when the candidate value is stored in the storage unit 7, the control unit 6 that controls the operation device 10 causes a transition of the operation target to the candidate value in response to the second operation of the rotation operation unit 12. Thus, the simple second operation of the rotation operation unit 12 makes it possible to apply the temporarily stored candidate value to the operation target, achieving the rotation operation unit 12 having higher operability.

Alternatively, in the operation device 10, the display unit 4 capable of displaying an operation target displays a plurality of selectable options as an operation target. The control unit 6 that controls the operation device 10 causes a transition of the selection of options in response to the first operation of the rotation operation unit 12, and determines the selection of options in response to the second operation of the rotation operation unit 12. Thus, different operations of the single rotation operation unit 12 make it possible to selectively perform selection of options as an operation target and determination of options, achieving the rotation operation unit 12 having higher operability.

Alternatively, in the operation device 10, the display unit 4 capable of displaying an operation target alternatively displays a plurality of options as an operation target. The control unit 6 that controls the operation device 10 selects and determines one of the options in response to the second operation in the normal rotation direction of the rotation operation unit 12, and selects and determines the other option in response to the second operation in the reverse rotation direction of the rotation operation unit 12. Thus, different operations of the single rotation operation unit 12 make it possible to selectively perform confirmation of the selection of one of the alternative options as an operation target and confirmation of the selection of the other option, achieving the rotation operation unit 12 having higher operability.

Alternatively, in the operation device 10, the display unit 4 capable of displaying an operation target displays a plurality of options as an operation target in a matrix. The control unit 6 that controls the operation device 10 causes a transition of the operation target in a first direction which is the column direction or the row direction, in response to the first operation of the rotation operation unit 12, and causes a transition of the operation target in a second direction that is perpendicular to the first direction, in response to the second operation of the rotation operation unit 12. Thus, different operations of the single rotation operation unit 12 make it possible to simply perform selection of a plurality of options arranged in a matrix, achieving the rotation operation unit 12 having higher operability.

Alternatively, in the operation device 10, the display unit 4 capable of displaying an operation target displays a plurality of screens between which a transition can be made. As an operation target which is the screens displayed on the display unit 4, the control unit 6 that controls the operation device 10 displays, in place of the currently displayed screen, another screen in response to the second operation. Thus, the simple second operation of the single rotation operation unit 12 makes it possible to switch the screen displayed on the display unit 4, achieving the rotation operation unit 12 having higher operability.

Furthermore, the control unit 6 that controls the operation device 10 allows the second operation content for the second operation of the rotation operation unit 12 to be set for each of the screens. This makes it possible to apply a second operation content suitable for each of the operation targets displayed on the respective plurality of screens. Thus, the simple second operation of the single rotation operation unit 12 makes it possible to apply, to the operation target, the second operation content desired by an operator, achieving the rotation operation unit 12 having higher operability.

Furthermore, the operation device 10 further includes the second sign 16 that indicates the second operation content for the second operation of the rotation operation unit 12. This enables an operator to use the second sign 16 to check the second operation content, promoting the use of the second operation, thus achieving the rotation operation unit 12 having higher operability.

Furthermore, the operation device 10 further includes the switching operation unit that switches the operation mode of the second operation of the rotation operation unit 12. Thus, a different operation content set according to the operation mode allows an even wider range of operation contents for the single rotation operation unit 12, achieving the rotation operation unit 12 having higher operability.

In the example described in the above embodiments, the operation device 10 is applied to the construction machine 1; however, the present invention is not limited to this example. For example, in other embodiments, the operation device 10 may be applied to a work machine other than the construction machine 1.

The present invention can be appropriately modified without departing from the gist or idea of the invention readable from the claims and the entire specification, and an operation device and a construction machine with such a modification are also included in the technical idea of the present invention.

### DESCRIPTION OF REFERENCE NUMERALS

1 Construction machine
2 Traveling unit
3 Work unit
4 Display unit
5 Operation unit
6 Control unit
7 Storage unit
8 Engine
10 Operation device
12 Rotation operation unit
13 Pressing operation unit
14 Switching operation unit
15 First sign
16 Second sign
20 Operation determination unit
21 Display control unit

## Claims

1. An operation device comprising a rotation operation unit that receives a rotation operation, wherein
in response to a first operation in which a rotation operation amount of the rotation operation unit is less than a predetermined operation amount threshold per predetermined unit time, a first operation content that corresponds to the rotation operation amount is applied to an operation target, and
in response to a second operation in which the rotation operation amount is greater than or equal to the operation amount threshold per unit time, a second operation content that is different from the first operation content is applied to the operation target.

2. The operation device according to claim 1, wherein
a transition of the operation target by a change amount that corresponds to the rotation operation amount is performed in response to the first operation, and
a transition of the operation target by a change amount that is set in advance is performed in response to the second operation.

3. The operation device according to claim 1, wherein
a transition of the operation target by a change amount that corresponds to the rotation operation amount is performed in response to the first operation, and
a transition of the operation target to a specified state that is set in advance is performed in response to the second operation.

4. The operation device according to claim 3, further comprising a display unit that is capable of displaying the operation target, wherein
the display unit displays the specified state in an identifiable mode.

5. The operation device according to any one of claims 1 to 3, further comprising a storage unit, wherein
when a transition of the operation target to a predetermined candidate value has been performed in response to the first operation, the candidate value is stored in the storage unit in response to the second operation.

6. The operation device according to claim 5, further comprising a display unit that is capable of displaying the operation target, wherein
while the candidate value is stored in the storage unit, the display unit displays the candidate value in an identifiable mode.

7. The operation device according to claim 5 or 6, wherein
when the candidate value is stored in the storage unit, a transition of the operation target to the candidate value is performed in response to the second operation.

8. The operation device according to claim 1, further comprising a display unit that is capable of displaying the operation target, wherein
the display unit displays a plurality of selectable options as the operation target, and
a transition of a selection of the options is performed in response to the first operation, and the selection of the options is determined in response to the second operation.

9. The operation device according to claim 1, further comprising a display unit that is capable of displaying the operation target, wherein
the display unit alternatively displays a plurality of options as the operation target, and
one of the options is selected and determined in response to the second operation in a normal rotation direction, and the other of the options is selected and determined in response to the second operation in a reverse rotation direction.

10. The operation device according to claim 1, further comprising a display unit that is capable of displaying the operation target, wherein
the display unit displays a plurality of options as the operation target in a matrix, and
a transition of the operation target in a first direction which is a column direction or a row direction is performed in response to the first operation, and a transition of the operation target in a second direction that is perpendicular to the first direction is performed in response to the second operation.

11. The operation device according to claim 1, further comprising a display unit that is capable of displaying the operation target, wherein
the display unit displays a plurality of screens between which a transition can be made, and
in response to the second operation, another screen is displayed in place of the currently displayed screens displayed as the operation target.

12. The operation device according to claim 1, further comprising a display unit that is capable of displaying the operation target, wherein
the display unit displays a plurality of screens between which a transition can be made, and
the second operation content for the second operation is settable for each of the screens.

13. The operation device according to any one of claims 1 to 12, further comprising a sign that indicates the second operation content for the second operation.

14. The operation device according to any one of claims 1 to 13, further comprising a switching operation unit that switches an operation mode of the second operation.

15. A construction machine comprising the operation device according to any one of claims 1 to 14.
